# FASCICULE DE BREVET EUROPEEN

(11) **EP 0 460 982 B1**
(45) Date de publication et mention de la délivrance du brevet: **22.06.1994**
(21) Numéro de dépôt: 91401204.2
(22) Date de dépôt: 07.05.1991
(51) Int. Cl.: G21C 3/352

(54) **Grille pour assemblage combustible nucléaire à réseau triangulaire et assemblage en comportant application**
Kernbrennstabbündelabstandhalter mit Dreiecksmuster und Anwendung in Kernbrennstabbündel
Nuclear fuel assembly grid having a triangle pattern and utilisation in an assembly

(30) Priorité: 10.05.1990 FR 9005820
(43) Date de publication de la demande: 11.12.1991
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Cachat, Stéphane, F-69003 Lyon (FR)
(74) Mandataire: Fort, Jacques

(56) Documents cités:
- EP-A- 0 065 613
- EP-A- 0 181 264
- EP-A- 0 307 320
- GB-A- 1 386 424
- US-A- 4 714 585

## Description

Le domaine concerné par l'invention est celui des assemblages combustibles nucléaires dont les crayons de combustible sont répartis aux noeuds d'un réseau triangulaire et elle trouve une application particulièrement importante dans les assemblages combustibles pour réacteurs refroidis et modérés à l'eau légère.

Les assemblages combustibles actuellement utilisés dans de tels réacteurs comprennent généralement un faisceau de crayons de combustible (ce terme désignant aussi bien les crayons chargés en matière fissile que ceux chargés partiellement ou totalement en matière fertile) et une structure de maintien du faisceau comprenant des pièces d'extrémité supérieure et inférieure reliées par des tubes guides qui portent des grilles de maintien des crayons combustibles aux noeuds d'un réseau régulier.

Les grilles sont réparties le long de l'assemblage, à intervalles suffisamment rapprochés pour maintenir un écartement régulier entre les crayons sur toute leur longueur, en dépit des déformations provoquées par l'irradiation, et pour donner aux fréquences propres de vibration des crayons entre deux grilles une valeur élevée, qui évite l'excitation, par le réfrigérant, de régimes vibratoires dangereux.

Considérées dans leur ensemble les grilles doivent assurer deux autres fonctions :
- supporter les crayons,
- homogénéiser les écoulements autour des crayons, afin d'éviter l'apparition de points chauds.

La première de ces fonctions est généralement remplie par l'une et/ou l'autre des grilles d'extrémité, munie à cet effet de ressorts de serrage des crayons. L'autre fonction est remplie par au moins les grilles intermédiaires.

On connaît déjà différents types de grilles destinées à maintenir des crayons de combustible aux noeuds d'un réseau triangulaire.

On connaît notamment (FR-A-2 594 998) une grille comprenant une ceinture de forme hexagonale et trois jeux de plaquettes fixés à la ceinture, les plaquettes de chaque jeu étant parallèles entre elles et faisant un angle de 120° avec les plaquettes des autres jeux.

Dans cette grille connue, les plaquettes d'un jeu constituent un lit espacé des autres lits dans le sens longitudinal de l'assemblage. Cette solution présente un certains nombre d'avantages, mais, les plaquettes étant toutes parallèles à une face de la ceinture et s'étendant sur toute la largeur de la grille, il est nécessaire de prévoir plusieurs modèles de plaquettes, ce qui complique considérablement la fabrication.

On connaît également (FR-A-2 145 676 ou EP-A-0 239 441) un assemblage combustible ayant un boîtier externe s'étendant tout le long de l'assemblage, dans lequel sont réparties longitudinalement, à intervalles réguliers, des structures de maintien des crayons. Chaque structure comprend deux jeux de plaquettes, les plaquettes d'un jeu étant parallèles à deux faces opposées du boîtier et faisant un angle de 120° avec celles de l'autre jeu, de façon à définir des cellules à section en forme de losange dont les axes sont répartis suivant un réseau triangulaire. Les plaquettes d'un jeu sont décalées longitudinalement par rapport à celles de l'autre jeu et les deux jeux sont solidarisés du boîtier. Cette solution implique la présence d'un boîtier. Les structures ne sont pas isotropes du point de vue mécanique. Comme dans le cas précédent, une même structure comporte un grand nombre de plaquettes différentes.

La présente invention vise à fournir une grille du type ci-dessus défini de fabrication simple et de structure mécaniquement isotrope, pouvant ne comprendre qu'une seule nappe de plaquettes, en dépit de la présence de trois jeux de plaquettes.

Dans ce but l'invention propose une grille caractérisée en ce que toutes les plaques d'un même jeu ont la même longueur, sont pliées à 120° en leur milieu et sont parallèles à deux faces successives de la ceinture. Les plaquettes des trois jeux sont avantageusement enchevêtrées pour constituer un seul lit et délimiter les alvéoles destinées chacune à guider un crayon et dont la majeure partie est en forme de losange.

Dans le cas où la grille est destinée uniquement à centrer et guider les crayons, les plaquettes peuvent être prévues pour s'appliquer directement sur les crayons. Les plaquettes seront généralement planes, sauf lorsqu'il est souhaitable de réaliser un réseau très serré, auquel cas les plaquettes peuvent être ondulées au pas de répartition des crayons le long des plaquettes.

Les plaquettes peuvent également comporter des bossages limitant le débattement des crayons. Elle peuvent enfin être munies d'ailettes de mélange.

L'invention vise également à fournir un assemblage combustible de section hexagonale, dépourvu de boîtier externe, utilisable en particulier dans un réacteur sous-modéré et/ou à variation de spectre refroidi et modéré à l'eau légère, dont la structure de maintien est constituée de deux sous-structures, dont l'une comporte une des pièces d'extrémité (en général la pièce d'extrémité supérieure), une partie des tubes guides, la grille support des crayons (qui est fixée de façon rigide aux tubes guides de la sous-structure) et des grilles de centrage des crayons et éventuellement d'homogénéisation et/ou de supportage des crayons du genre qui vient d'être défini. Une répartition en deux sous-structures est décrite par exemple dans les documents EP-A-214 895 et EP-A-307 320 auxquels on pourra se reporter.

Dans un assemblage combustible, notamment du type qui vient d'être défini, il est avantageux que deux grilles successives soient décalées angulairement l'une par rapport à l'autre de 60°, de façon à homogénéiser la retenue des crayons.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma de principe d'un assemblage combustible à deux sous-structures d'un réacteur à variation de spectre refroidi et modéré par de l'eau légère sous pression, pouvant comporter des grilles suivant l'invention ;
- la figure 2 est une vue de dessus d'une grille selon un mode particulier de réalisation de l'invention ;
- la figure 3 montre l'ensemble des plaquettes d'un des jeux mis en oeuvre dans la grille de la figure 2 ;
- la Figure 4 est une vue en plan schématique d'une grille suivant l'invention, destinée à faire apparaître les différentes formes de cellule ;
- les Figures 4A et 4B montrent deux constitutions possibles de bossettes pouvant équiper la cellule indiquée en A, B sur la Figure 4 ;
- les Figures 4C et 4D montrent des exemples de bossettes pouvant respectivement équiper les cellules indiquées par C et D sur la Figure 4 ;
- les Figures 5A et 5B montrent un ressort pouvant équiper une cellule en losange, représenté respectivement en vue de dessus et en perspective ;
- la Figure 6, similaire à la Figure 5A, montre un exemple de cellule en chevron munie de ressorts et de bossettes ;
- la Figure 7, similaire à la Figure 5A, montre une constitution possible de ressorts ;
- la Figure 8, similaire à la Figure 7, montre un exemple d'ailettes pouvant équiper une cellule en losange ;
- la Figure 9 est une vue schématique en plan montrant, par des flèches, les orientations de filets de réfrigérant que permettent d'obtenir des ailettes du genre montré en Figure 8.

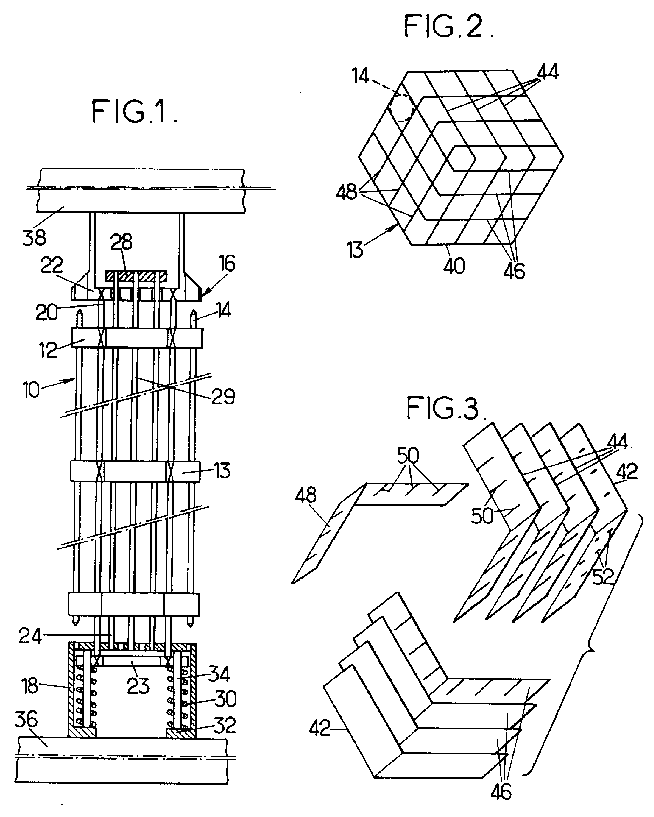

Comme on l'a indiqué plus haut, une grille suivant l'invention est notamment utilisable dans un assemblage combustible de section hexagonale à deux sous-structures, tel que l'assemblage 10 montré en figure 1, où seuls quelques crayons combustibles 14 sont montrés.

La structure support est constituée de deux pièces d'extrémité supérieure 16 et inférieure 18 et de tubes guides 20 et 24 remplaçant les crayons à certains des noeuds du réseau des crayons. La première sous-structure comprend les tubes guides 20, la pièce d'extrémité supérieure 16 et une plaque 23 mobile dans la pièce d'extrémité inférieure 18. Les tubes guides traversent le fond 22 de la pièce d'extrémité 18, dans lequel ils peuvent coulisser verticalement.

La première sous-structure comprend également la grille d'extrémité supérieure 12, destinée à porter les crayons combustibles 14 et munie à cet effet de moyens de serrage des crayons, ainsi que certaines au moins des grilles intermédiaires 13. La grille d'extrémité inférieure peut également être fixée aux tubes guides 20. La solidarisation des tubes guides 20 de la première sous-structure, de la grille 12 et du fond de la pièce d'extrémité supérieure 16 est indiquée par des croix sur la figure 1.

La seconde sous-structure comprend la pièce d'extrémité inférieure 20, les autres tubes guides 24 et une plaque 28 mobile verticalement dans la partie en forme de cadre de la pièce d'extrémité supérieure 16, au-dessus du fond 22 de la pièce 16. Les tubes guides 24 traversent ce fond dans lequel ils peuvent coulisser. La seconde sous-structure peut également comporter un tube central d'instrumentation 29.

Des ressorts 30, au nombre de quatre par exemple, sont placés entre la plaque 23 et des rebords 32 prévus à la partie inférieure du cadre de la pièce d'extrémité inférieure 18. Ces ressorts exercent sur la plaque 23 une force tendant à la maintenir en appui sur le fond de la plaque 18. Des tiges 34 fixées à la pièce d'extrémité inférieure 18 guident les ressorts 30 et la plaque 23.

Après chargement des assemblages dans le réacteur, la pièce d'extrémité inférieure 18 de chaque assemblage repose sur la plaque support de coeur 36. Les ressorts 30 supportent la première sous-structure et maintiennent la plaque 23.

Lorsque la plaque supérieure de coeur 38 est mise en place, la pression qu'elle exerce sur la pièce d'extrémité supérieure 16 s'ajoute au poids de la première sous-structure.

Lorsque le réacteur est en fonctionnement, le réfrigérant exerce sur la première sous-structure une force qui tend à appliquer davantage la pièce d'extrémité supérieure 16 contre la plaque supérieure de coeur 38. La force que le réfrigérant exerce sur la seconde sous-structure, beaucoup plus faible que celle qu'il exerce sur la première sous-structure, est absorbée par les ressorts 30 sans soulèvement de la pièce d'extrémité inférieure 18.

Les grilles intermédiaires 13, destinées à maintenir les crayons aux noeuds d'un réseau triangulaire, peuvent être dépourvues de ressorts de supportage des crayons et avoir la constitution montrée en figures 2 et 3.

Chaque grille est constituée par assemblage de plusieurs jeux de plaquettes qui sont toutes en un alliage à faible absorption neutronique, généralement à base de zirconium.

La grille 13 peut être regardée comme comprenant une ceinture 40 et des plaquettes définissant des cellules destinées chacune à recevoir un crayon 14, dont un seul est montré schématiquement sur la figure 2. La ceinture peut être constituée par une bande de tôle en alliage de zirconium pliée pour avoir la forme d'un hexagone ou par des tronçons de bandes ayant chacun une longueur égale à celle d'un côté de la ceinture, ces tronçons étant reliés entre eux par soudage, par exemple par faisceau d'électrons ou par faisceau laser. Pour réduire le nombre de types de composants, il est cependant plus avantageux de constituer la ceinture en trois plaquettes 42 ayant la même forme que les plaquettes internes 44 et auxquelles sont soudées ou brasées les plaquettes internes.

Les plaquettes internes 44, 46 et 48 appartiennent à trois jeux entrecroisés à 120° l'un de l'autre. Toutes ces plaquettes s'étendent entre deux faces opposées de la ceinture et présentent en leur milieu un angle de 120°. Elles constitueront en général un seul lit, obtenu en enchevêtrant les plaquettes 44, 46 et 48. Dans ce but, des fentes 50 dont la longueur est égale à la moitié de la largeur des plaquettes sont ménagées dans ces dernières. Il est évidemment nécessaire que l'un au moins des jeux de plaquettes 44, 46 et 48 ait des fentes dirigées dans les sens opposés de part et d'autre du pli médian de la plaquette. Dans le cas illustré, les plaquettes 44 sont inversées sur les plaquettes 46 et 48 déjà assemblées. Les plaquettes une fois enchevêtrées sont solidarisées de façon permanente, par exemple par des points de soudure aux croisements, selon une technologie bien connue.

Pour garantir une mise en place correcte des plaquettes 44, 46 et 48 sur la ceinture, les plaquettes 42 qui constituent cette dernière peuvent comporter des ouvertures 52 destinées à recevoir des tenons (non représentés) prolongeant les arêtes terminales des plaquettes 44, 46 et 48.

Comme cela a été indiqué plus haut, les plaquettes peuvent être munies de moyens d'appui rigides ou élastiques sur les crayons.

Ces appuis peuvent être des bossettes constituées par déformation des plaquettes elles-mêmes à la presse, des languettes déformées et repoussées, ou des ressorts rapportés, ce qui permet en particulier de constituer une grille ayant des plaquettes en alliage à base de zirconium et des ressorts en un alliage du type "Inconel", ayant de meilleures résistances mécaniques mais en contrepartie une absorption neutronique plus élevée. Enfin les plaquettes (ou du moins les plaquettes internes 44, 46 et 48) peuvent avoir une forme ondulée au pas de répartition des crayons lorsqu'on souhaite réduire ce pas.

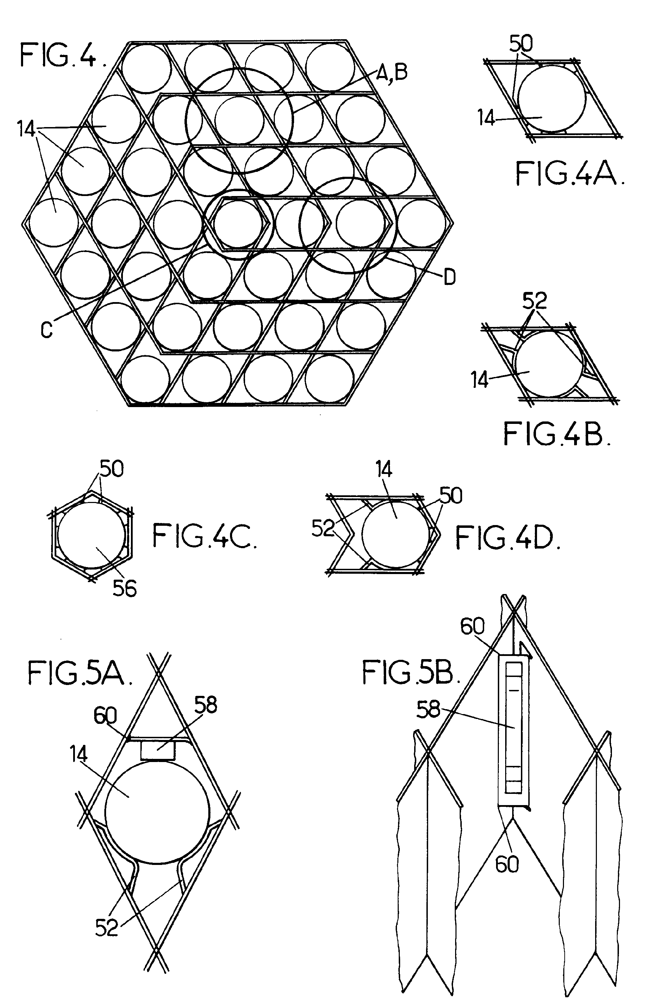

En particulier, des bossettes peuvent être prévues sur tous les types de cellules (en losange, en chevron, hexagonale). L'appui est moins nécessaire pour la cellule hexagonale centrale, car elle est généralement destinée à un tube d'instrumentation. Les Figures 4A, 4B, 4C et 4D montrent, à type d'exemples, diverses formes de bossettes utilisables, formées par découpe et enfoncement local des plaquettes, sous forme de boutons 50 (Figures 4A, 4B et 4C) ou de pontets 52 (Figures 4B et 4D). Des bossages 50 peuvent être prévus sur la paroi de la cellule hexagonale centrale, pour centrer le tube d'instrumentation 56.

Les cellules peuvent être munies de moyens de maintien axial des crayons, constitués par des ressorts rapportés sur les plaquettes ou découpés dans les plaquettes, comme dans le cas des grilles actuelles.

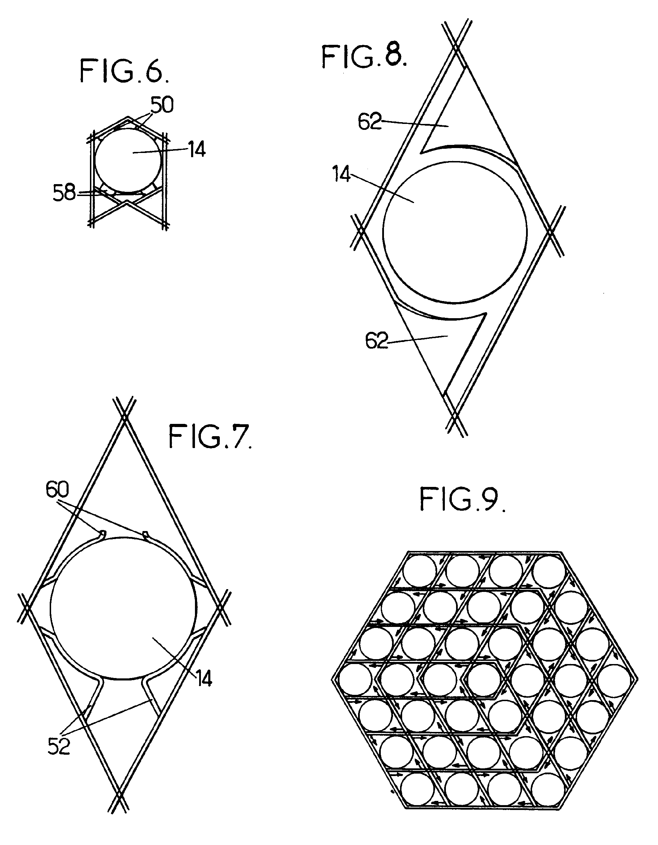

La cellule hexagonale montrée schématiquement en Figures 5A et 5B comporte, en plus de deux bossettes 52, un ressort 58 réalisé par emboutissage d'une plaquette, déformation de la partie emboutie et soudage terminal en 60. Le ressort 58 pourrait aussi bien être rapporté. La Figure 6 montre une cellule en chevron comportant deux bossettes 50 et deux ressorts 58 rapportés ou constitués par emboutissage. Dans tous les cas, la présence de points ou d'un cordon de soudure augmente la résistance mécanique de la grille.

Dans une autre variante encore de réalisation, montrée en Figure 7, le crayon 14 est maintenu par des ressorts 60 ayant la même forme que les bossettes en pont 52, mais coupés. Ce même type de ressort pourrait être utilisé dans des cellules en chevrons.

Dans la plupart des assemblages, certaines au moins des grilles sont munies d'ailettes de mélange des filets de réfrigérant. Les cellules en losange aussi bien que les cellules en chevron d'une grille selon l'invention peuvent être ainsi équipées. La Figure 8 montre, à titre d'exemple, une cellule en losange comportant deux ailettes 62 constituées par des pattes attenantes aux plaquettes, sur un bord de ces dernières, et pliées. La surface de telles ailettes 62 peut être supérieure à celle que l'on trouve dans des grilles où chaque cellule est hexagonale, du fait que l'espace disponible entre crayon et plaquette est plus grand. De telles ailettes peuvent être prévues sur des cellules ayant également des bossettes et/ou des ressorts de centrage et/ou de maintien des crayons.

La Figure 9 montre, à titre d'exemple, l'orientation et la circulation des filets fluides que permettent de réaliser des ailettes du genre montré en Figure 8.

Il sera généralement avantageux de décaler angulairement de 60° deux grilles 13 successives, de façon que, pour les crayons alignés suivant les directions radiales vers les angles de la grille, il y ait alternativement supportage dans une cellule en losange et supportage dans une cellule en forme de chevrons.

Il est possible de constituer un assemblage dont certaines grilles seulement sont d'un des types qui viennent d'être décrits, les autres étant de constitution classique.

## Revendications

1. Grille comprenant une ceinture de forme hexagonale et trois jeux de plaquettes fixées à la ceinture, les plaquettes de chaque jeu étant parallèles entre elles et faisant un angle de 120° avec les plaquettes des deux autres jeux, caractérisée en ce que toutes les plaquettes (44,46 ou 48) d'un même jeu ont la même longueur, sont pliées à 120° en leur milieu et sont parallèles à deux faces successives de la ceinture.

2. Grille selon la revendication 1, caractérisée en ce que les plaquettes (44,46,48) des trois jeux sont enchevêtrées pour constituer un seul lit et délimiter des alvéoles destinées chacune à guider un crayon, la majeure partie des alvéoles étant en forme de losange.

3. Grille selon la revendicatlon 1 ou 2, destinée uniquement à centrer et guider les crayons, caractérisée en ce que les plaquettes sont prévues pour s'appliquer directement sur les crayons et sont planes.

4. Grille selon la revendication 1, 2 ou 3, caractérisée en ce que la ceinture est constituée de plaquettes (42) comportant des ouvertures (52) destinées à recevoir des tenons prolongeant les arêtes terminales des plaquettes internes (44,46,48).

5. Grille selon l'une quelconque des revendications précédentes, caractérisée en ce que les plaquettes sont munies de moyens d'appui rigides ou élastiques sur les crayons.

6. Grille selon la revendication 5, caractérisée en ce que les appuis sont des bossettes constituées par déformation des plaquettes à la presse, des languettes déformées et repoussées, ou des ressorts rapportés.

7. Grille selon la revendication 6, caractérisée en ce que les bossettes sont formées par découpe et enfoncement local des plaquettes, sous forme de boutons (50) ou de pontets (52).

8. Grille selon la revendicatlon 5, caractérisée en ce que les appuis élastiques sont des ressorts (58) réalisés par emboutissage d'une plaquette, déformation de la partie emboutie et soudage terminal.

9. Grille selon l'une quelconque des revendications précédentes, caractérisée en ce qu'elle est munie d'ailettes de mélange des filets de réfrigérant.

10. Assemblage combustible nucléaire de section hexagonale, dépourvu de boîtier externe, ayant une structure de maintien constituée de deux sous-structures, dont l'une comporte une des pièces d'extrémité (16), une partie des tubes guides (20), une grille support des crayons fixée de façon rigide aux tubes guides de la sous-structure et des grilles (13) de centrage des crayons, caractérisé en ce que lesdites grilles sont conformes à une quelconque des revendications précédentes.

11. Assemblage selon la revendication 10, caractérisé en ce que deux grilles (13) successives sont décalées de 60°.

## Patentansprüche

1. Abstandshaltegitter mit einem hexagonalen Gurt und drei Sätzen von Stegen, die an dem Gurt befestigt sind, wobei die Stege eines jeden Satzes zueinander parallel sind und einen Winkel von 120° mit den Stegen der anderen beiden Sätze einschließen, **dadurch gekennzeichnet**, daß alle Stege (44, 46 oder 48) eines selben Satzes die gleiche Länge aufweisen, in ihrer Mitte mit einem Winkel von 120° geknickt sind und jeweils zu zwei aufeinanderfolgende Seiten des Gurtes parallel sind.

2. Gitter nach Anspruch 1, **dadurch gekennzeichnet**, daß die Stege (44, 46, 48) der drei Sätze verblockt sind, um eine einzige Schicht zu bilden und um Waben einzugrenzen, die dazu bestimmt sind, jeweils einen Brennstab zu führen, wobei die Mehrzahl der Waben rautenförmig ist.

3. Gitter nach Anspruch 1 oder 2, ausschließlich dazu bestimmt, die Brennstäbe zu zentrieren und zu führen, **dadurch gekennzeichnet**, daß die Stege so ausgebildet sind, daß sie direkt auf den Stäben anliegen und eben sind.

4. Gitter nach Anspruch 1, 2 oder 3, **dadurch gekennzeichnet**, daß der Gurt aus Stegen (42) besteht, die Öffnungen (52) aufweisen, die dazu bestimmt sind, Lappen aufzunehmen, die die Endkanten der inneren Stege (44, 46, 48) verlängern.

5. Gitter nach einem der vorstehenden Ansprüche, **dadurch** **gekennzeichnet**, daß die Stege mit steifen oder elastischen Organen zum Andrücken an die Brennstäbe versehen sind.

6. Gitter nach Anspruch 5, **dadurch gekennzeichnet**, daß die Andruckorgane Ausbuchtungen sind, die durch Preßverformung der Stege gebildet wurden, durch verformte und zurückgeschobene Zungen oder umgebogene Federn.

7. Gitter nach Anspruch 6, **dadurch gekennzeichnet**, daß die Ausbuchtungen durch Ausschnitte und lokale Eindrückungen der Stege in Form von Höckern (50) oder Brücken (52) gebildet sind.

8. Gitter nach Anspruch 5, **dadurch gekennzeichnet**, daß die elastischen Andruckorgane Federn (58) sind, die durch Tiefziehen eines Steges, Verformung des tiefgezogenen Bereichs und Endverschweißung hergestellt sind.

9. Gitter nach einem der vorstehenden Ansprüche, **gekennzeichnet** durch Mischgitter für die Kühlmittelströme.

10. Kernbrennelementkassette mit hexagonalem Querschnitt ohne äußerem Gehäuse mit einem Halteraufbau bestehend aus zwei Unteraufbauten, von denen einer eines der Endstücke (16) aufweist, einem Teil der Führungsrohre (20), einem Trägergitter für die Brennstäbe, welches steif an den Führungsrohren der Unterstruktur befestigt ist, und Gittern (13) zur Zentrierung der Brennstäbe, **dadurch gekennzeichnet,** daß die Gitter die Merkmale eines der vorstehenden Ansprüche aufweisen.

11. Brennelementkassette nach Anspruch 10, **dadurch** **gekennzeichnet**, daß zwei aufeinanderfolgende Gitter (13) um 60° winkelversetzt sind.

## Claims

1. A grid comprising a belt of hexagonal shape and three sets of plates secured to the belt, the plates in each set being mutually parallel and being at an angle of 120° with the plates of the other two sets,
characterised in that all plates (44, 46, 48) of a same set have the same length, are folded at a 120° angle in the middle, and are parallel to two successive sides of the belt.

2. Grid according to claim 1,
characterised in that the plates (44, 46, 48) of the three sets are mutually interlocked to constitute a single bed and to define cells each for guiding a rod, most of the cells being diamond-shaped.

3. Grid according to claim 1 or 2, only for centering and guiding the rods,
characterised in that the plates are arranged to be in direct contact with the rods and are planar.

4. Grid according to claim 1, 2 or 3,
characterised in that the belt consists of plates (42) formed with openings (52) for receiving lugs projecting from the end edges of the internal plates (44, 46, 48).

5. Grid according to any one of the preceding claims,
characterised in that the plates are provided with means for rigid or resilient abutment on the rods.

6. Grid according to claim 5,
characterised in that the abutment means are embossments pressed out from the plates, shaped and cut out tongues, or springs connected to the plates.

7. Grid according to claim 6,
characterised in that the embossments are formed by cutting out and locally deforming the plates, as buttons (50) or bridges (52).

8. Grid according to claim 5,
characterised in that the resilient abutments are springs (58) formed by press-shaping a plate, deformation of the pressed out portion and end-welding.

9. Grid according to any one of the preceding claims,
characterised in that it is formed with fins for mixing the flows of coolant.

10. Nuclear fuel assembly having an hexagonal cross-section, devoid of external casing, having a structure consisting of two sub-structures, one of which comprises one of the end pieces (16), some of the guide tubes (20), a rod supporting grid which is rigidly secured to the guide tubes of the substructure and grids (13) for centering the rods,
characterised in that said grids are in accordance with any one of the preceding claims.

11. Assembly according to claim 10,
characterised in that two successive grids (13) have an angular offset of 60°.
